Europäisches Patentamt

(19) European Patent Office

Office européen des brevets

(11) Publication number: **0 201 890**
**A2**

(12) # EUROPEAN PATENT APPLICATION

(21) Application number: **86106396.4**

(22) Date of filing: **12.05.86**

(51) Int. Cl.⁴: **C 09 J 7/02**
C 08 L 27/06, C 08 L 23/28
//C08L23/08

(30) Priority: **13.05.85 US 732981**

(43) Date of publication of application:
**20.11.86 Bulletin 86/47**

(84) Designated Contracting States:
**BE DE FR GB IT NL SE**

(71) Applicant: **THE DOW CHEMICAL COMPANY**
**2030 Dow Center Abbott Road P.O. Box 1967**
**Midland, MI 48640(US)**

(72) Inventor: **Kelch, Robert Harold**
**127 Bridle Path**
**Granville, Ohio 43023(US)**

(74) Representative: **Sternagel, Hans-Günther, Dr. et al,**
**Patentanwälte Dr. Michael Hann Dr. H.-G. Sternagel**
**Sander Aue 30**
**D-5060 Bergisch Gladbach 2(DE)**

(54) Weatherable films.

(57) A weather resistant film comprising a weather resistant layer of a blend of a vinyl chloride polymer and chlorinated polyethylene and a second layer comprising a normally solid thermoplastic adhesive. Improved performance is obtained when the first layer additionally comprises an interpolymer of ethylene and at least one carboxylic acid or ester thereof containing ethylenic unsaturation.

WEATHERABLE FILMS

The present invention relates to weatherable films and, more particularly, to films comprising a blend of polymers having exceptional stability to ultraviolet light degradation. The novel compositions of the invention are especially well suited for use as extruded films which may be employed as weatherable surface coatings for various substrates, especially aluminum or steel in the form of sheets or other shapes for use in building panels or other architectural applications.

According to the present invention there is provided a composite film comprising a weatherable layer of a polymer blend and an adhesive layer. More particularly, there is provided a unique laminated structure wherein the weatherable layer comprises a ternary blend of polymers having exceptional weather resistance as well as compatibility with an adhesive layer. The composite films of the invention are preferably prepared by coextrusion techniques but may be

33,773-F                              -1-

0201890

prepared by joining together separately prepared weatherable and adhesive layers by any suitable technique, such as heat sealing.

It is previously known in the art to employ chlorinated polyolefins in applications requiring weatherable surfaces such as on sheet metal used in roofing as well as other architectural type materials. Representative of the prior art is U.S. Patent No. 3,705,067 which discloses a flashing material comprising one or more film layers of an essentially non-plasticized thermoplastic sheet of solid chlorinated olefin polymer and an inherently porous woven reinforcing fiber mat. No adhesive layer is provided and contact between the fiber mat and the chlorinated olefin layer is obtained by application of heat and pressure.

Blends of polyvinyl chloride and chlorinated polyethylene or other chlorinated polyolefins are also previously known from e.g. U.S. Patent Nos. 3,165,560, 3,006,889; 3,291,863; 3,299,182; 3,904,579; 3,940,456; 3,994,995 and 4,113,805.

In U.S. Patent No. 3,845,166 there is provided a curable composition for wire insulation containing a chlorinated polyolefin, polyvinyl chloride, an ethylene polymer such as ethylene vinyl acetate, and a curing agent.

While previously known blends have been usefully employed to prepare moldings and extruded objects, a composite film comprising an adhesive layer and a weather resistant layer of polymer blends is believed to be previously unknown.

It would be desirable to provide a composite film which is readily adherable to metal or other structural substrates for improved weather resistance. In particular, it would be desirable to provide a thin extruded film having properties suitable for use as a coating to a metal substrate.

According to the present invention there is now provided a composite film having a first layer comprising a blend of vinyl chloride polymer and a chlorinated polyolefin and a second layer comprising a normally solid thermoplastic adhesive. Preferably, in the composite film the first layer additionally includes an interpolymer of ethylene and at least one carboxylic acid or ester thereof containing ethylenic unsaturation. The second layer comprises a normally solid (normally solid at ambient temperature) thermoplastic adhesive layer comprising a blend of 1) an interpolymer of ethylene and at least one ethylenically unsaturated carboxylic acid, and 2) an interpolymer of ethylene and at least one ethylenically unsaturated carboxylic acid ester. As employed herein the term "interpolymer" is employed to mean polymers of two or more monomers.

In another embodiment of the present invention there is provided a structure comprising a substrate, preferably a steel or aluminum sheet having adhered thereto a composite film of the above description.

In the composite film of the invention, the first layer comprising the previously described polymeric blend exhibits long-term weather resistance, ultraviolet light stability, hardness, scratch resistance, and an ability to be colored by the use of readily available colorants. Vinyl chloride polymers for use in the first layer include polyvinyl chloride as well as polymers of vinyl chloride and at least one co-monomer having up to 10 carbon atoms. Suitable co-monomers include olefins, vinyl esters as well as alkyl esters of unsaturated carboxylic acids. Preferred co-monomers include vinyl acetate, methyl acrylate or methyl methacrylate. The amount of any such co-monomers employed may be up to 23 percent by weight, preferably not more than 10 percent by weight. A preferred vinyl chloride polymer is polyvinyl chloride. Additives such as stabilizers, lubricants, and the like, may be present if desired. Suitably, the vinyl chloride polymer has an inherent viscosity of from 0.6 to 1.0 measured by ASTM Method Number D-1243. A preferred range is from 0.65 to 0.8.

Chlorinated polyolefins usefully employed in the first layer blend include solid particulated polyolefins which are chlorinated according to known techniques. Preferred chlorinated polyolefins are chlorinated polyethylenes especially low pressure polyethylene which has been chlorinated at an elevated temperature above 90°C. Suitable chlorinated polyethylenes and processes for their manufacture are more particularly described in the previously cited references. Suitable chlorinated polyethylenes have a melt viscosity of from 6,000 to 30,000 poise measured according to Method CPE D-3a, available from The Dow Chemical Company. A preferred viscosity is from 7,500 to 25,000 poise. The chlorine content of the chlorinated polyethylene is suitably from 25 to 42 percent by weight, preferably from 30 to 40 percent by weight. Additional additives may also be present in the chlorinated polyolefin if desired.  Examples include silicic acid and a siloxane oil (as disclosed in U.S. Patent No. 3,940,456), stabilizers, processing aids, and the like.

In the blend, the weight proportions of vinyl chloride polymers to chlorinated polyolefin may vary from 5:95 to 80:20.  A preferred proportion is from 10:90 to 75:25.

Preferably there is provided, in addition to the previously described blend of vinyl chloride polymer and chlorinated polyolefin, an interpolymer of ethylene and at least one carboxylic acid or ester thereof containing ethylenic unsaturation.  An especially preferred interpolymer is a copolymer of ethylene and vinyl acetate.  In the ternary blend, the interpolymer is suitably added to the previously described blend of vinyl chloride polymer and chlorinated polyolefin in an amount up to 30 weight percent, preferably up to 15 weight percent based on the total weight of the ternary blend.  The interpolymer suitably has a melt index of from 0.8 to 10 measured under ASTM D-1238 Condition E and preferably from 1.0 to 8.  The percent ethylene in such interpolymer is suitably from 95 to 40 weight percent, preferably from 90 to 50 weight percent, based on the total weight of the interpolymer.

Additional components may also be present in the composition of the weatherable layer according to the present invention.  Most notably, however, plasticizing additives such as, for example, mineral oil, need not be present or their amounts may be greatly reduced due to the plasticizing effect of the chlorinated polyolefin component.  However, suitable additives

33,773-F

which may be included are thermal stabilizers, process aids, pigments, colorants, fire retardants, antioxidants, fillers, and the like. Suitable thermal stabilizers include metal or mixed metal compounds such as barium, cadmium, zinc, calcium, sodium or lead salts of carboxylic acids especially long chain fatty acids (maleates, stearates, laurates, etc.), phosphorous containing compositions, epoxy resins, and epoxidized vegetable oils, and the like. Processing aids include low molecular weight polyethylene wax compositions, oxidized polyethylene wax, ester wax, and the like. Such processing aids may be used in combination with a coupling agent according to known techniques, if desired. Suitable pigments employed according to the present invention include well-known additives such as titanium dioxide. Fillers may be added in place of or in addition to pigments, if desired. Suitable compatible fillers include talc, mica, calcium carbonate, clay, aluminum trihydrate, glass fibers or microspheres, and the like. An ignition or flame retarding inhibiting agent may additionally be employed where desired in order to improve the ignition resistance of the present composition. Suitable ignition inhibitors include the well-known brominated aromatic compounds as well as phosphorous or antimony containing compounds or mixtures thereof. Antioxidants are suitably of the hindered .phenyl type. such as butylated hydroxy toluene, tetra-tertiary butyl dihydroxy biphenyl, and the like.

Preferably, such additives and fillers collectively are added so as to comprise no more than about 75 percent by weight of the resulting composition. It has also been discovered that at least some titanium dioxide of from 10 to 25 percent by weight, is desirable to provide effective resistance to ultraviolet light. Carbon black in an amount of from 2 to 10 percent by weight also provides excellent resistance to ultraviolet light.

Previously known conventional compounding systems may be employed in the preparation of compositions of the invention. Examples of suitable equipment include Banbury mixers, roll mills, continuous mixer/extruders, twin screw compounding extruders, etc. In the process, the various resins in their respective proportions are added in the form of pellets, or other suitable form along with additional desired additives. The mixture is then thoroughly mixed by use of one of the aforementioned compounding systems until a homogeneous melt is obtained. The melt may then be coextruded with an adhesive polymer to form the composite film laminate. Suitable equipment for the mixing and extruding operations includes equipment for use with chlorine containing polymers which are designed to prevent polymer degradation. While the ternary blend of the invention may be extruded into a film according to well-known techniques as previously described, the composition need not be limited to such uses. However, the presence of the interpolymer of ethylene and at least one carboxylic acid or ester thereof containing ethylenic unsaturation is believed to contribute to improved compatibility of the film to the normally solid thermoplastic adhesive.

The adhesive layer of the present invention is coextensive with the first layer and tightly bonded thereto. By the term tightly bonded is meant that the

33,773-F                    -7-

0201890

adhesion obtained between the two layers is at least as great as that of either polymer's own internal cohesive strength.

Suitable normally solid thermoplastic adhesives include interpolymers of an olefin, especially ethylene, and at least one co-monomer selected from carboxylic acids and esters thereof having ethylenic unsaturation. Suitable examples of the latter class include interpolymers of ethylene and up to about 60 percent by weight, preferably from 5 to 50 percent by weight, of at least one copolymerizable monomer selected from vinyl acetate, acrylic acid, methyl methacrylate, butyl acrylate, and mixtures thereof. Blends of one or more such interpolymers may also be employed. A preferred normally solid thermoplastic adhesive is a copolymer of ethylene and vinyl acetate or a blend thereof with a copolymer of ethylene and acrylic acid. A suitable blend comprises from 95 to 5 percent by weight ethylene/- vinyl acetate copolymer and the remainder comprises ethylene/acrylic acid copolymer. A particularly preferred modified ethylene/vinyl acetate copolymer is Plexar® 3062, available from Norchem Inc. A preferred ethylene/acrylic acid copolymer is EAA 1410 containing 9 percent by weight acrylic acid available from The Dow Chemical Company. A blend of the preferred Plexar® and EAA 1410 copolymers preferably are employed in a ratio of about 95 to 70 percent of the Plexar® 3062 and about 5 to 30 percent EAA 1410.

Suitably, the layers of a film prepared according to the present process are from 0.01 mm to 1 mm in thickness. Generally, the weather resistant

33,773-F                    -8-

first layer is thicker than the adhesive layer. Suitably, such first layer is 2 to 5 times thicker than the adhesive layer. By means of the adhesive layer, the composite film structure of the invention may be applied directly to substrates without the use of solvent based or other adhesives. The film is easily bonded to, for example, a metal surface which has been sufficiently heated to a temperature to cause melting of the adhesive layer and adhesion of the film to the metal surface employing presently available lamination equipment.

In the use of the present invention, the composite flexible film may be employed as a coating over a variety of suitable substrates. Included are metals such as aluminum, steel, galvanized steel, stainless steel, weatherable alloys, and other suitable substrates such as plastics, fabrics, and cellulosic materials such as paper. In the preferred embodiment, the substrate is a metal sheet, especially aluminum or steel sheeting.

The substrates having adhered thereto the composite film of the invention may be used in a variety of applications including roof sheeting, corrugated roofing, standing seam roofing, building panels, siding, gutters, downspouts, facia and other architectural trim, storage vessels, containers, tanks, highway barriers, window and door frames, culverts, piping, pipe jacketing, equipment housing for air conditioners, ventilators, pumps, and parts such as vehicle body panels, housings, and the like.

Because the composition of the present invention may contain colorants and pigments or the separate layers of the composite film may contain such additives, no additional topcoating is necessary or required in the resulting structures. However, a coating of paint or other material may be applied if desired.

Having described the invention, the following examples are provided to more particularly describe the present invention. Where provided parts or percentages are parts or percentages by weight.

Example 1

A weather resistant blend of copolymers demonstrating good adhesive compatibility and weather resistance is prepared by combining the following ingredients in the indicated weight percentage based on total composition weight.

| Component | Amount (%) |
|---|---|
| polyvinyl chloride resin (GEON® 86, available from B.F. Goodrich, (Inc.) | 44.68 |
| chlorinated polyethylene (CPE 3611 available from The Dow Chemical Company) | 29.79 |
| $TiO_2$ (DuPont R-960) | 14.89 |
| $CaCO_3$ (CS-11 available from Georgia Marble, Inc.) | 3.72 |
| Calcium Stearate | 0.60 |
| Polyethylene wax (6A available from Allied Chemical) | 0.74 |
| PLASCHEK® 775 ESO (an epoxidized soybean oil available from Ferro Corp.) | 2.23 |
| THERMCHEK® 1827 (a barium-calcium fatty acid soap thermal stabilizer available from Ferro Corp.) | 2.23 |
| THERMCHEK® 904 (a liquid phosphite chelator stabilizer available from Ferro Corp.) | 0.74 |
| IRGANOX® 1076 (a hindered phenolic antioxidant available from Ciba-Geigy, Inc.) | 0.38 |

The blend is prepared by first charging the polyvinyl chloride resin to a high intensity mixer and mixing for one minute. The processing aids and thermal stabilizers (but not pigments or additional resins) are added and mixing continued for several minutes until a temperature of from 80 to 95°C is obtained. The material is removed from the mixer and added to a Banbury mixer along with the additional components. The blend is fluxed for about five minutes until the temperature reaches 160°C to 180°C, then transferred to a two roll mill, formed into sheets, cooled and cut into cubes.

The resulting material may be reheated and coextruded with an adhesive resin to form a two layer film or joined to separately prepared adhesive films by heat sealing in a known manner. In the following runs, various adhesive resins further described in Table I are employed to form the adhesive layer. Films about 0.13 mm thick of both the weatherable resin and adhesive resin were prepared by compression molding and joined together by heat sealing. Adhesion between the weather resistant blend layer and adhesive layer is measured and reported in Table I.

0201890

## TABLE I

| Run | Weatherable Layer[1] | Adhesive Layer | Adhesion[2] (N/m) |
|-----|----------------------|----------------|-------------------|
| 1 | 80/20 | Plexar 100[3] | 1.4 |
| 2 | 60/40 | " | 1.4 |
| 3 | 40/60 | " | 2.6 |
| 4 | 20/80 | " | 3.3 |
| 5 | 80/20 | Plexar 3062[4] | 6.6 |
| 6 | 60/40 | " | 6.6 |
| 7 | 40/60 | " | 7.9 |
| 8 | 20/80 | " | 7.2 |
| 9 | 60/40 | Plexar 3062/EAA 1410[5] | 6.8 |
| 10 | 40/60 | " | 7.9 |
| 11 | 60/40 | Plexar 100/EVA 3294[6] | 4.4 |
| 12 | 40/60 | " | 6.1 |

[1] Weight ratio of chlorinated polyethylene (melt index 0.70 g/10 min)/ polyvinyl chloride (melt index 1.17 g/10 min).

[2] Plaques (0.13 mm in thickness) of the respective polymer blends prepared in a platen press are joined together by a hot bar sealer operating at 200°C, 344 Pa, 3 sec. contact time. Adhesion between layers is measured by an Instron adhesive tester (5" FSL, x-head-200 mm/min. chart-50 mm/min).

[3] Maleic anhydride modified copolymer of 88 percent by weight ethylene/12 percent vinyl acetate (melt index 0.85) available from Norchem Inc.

[4] Maleic anhydride modified copolymer of 82 percent ethylene, 18 percent vinyl acetate (melt index 1.0) available from Norchem Inc.

[5] 90/10 blend of Plexar 3062 and a random copolymer of 91 percent ethylene and 9 percent acrylic acid, 1.5 melt index. EAA 1410 is available from The Dow Chemical Company.

[6] 90/10 blend of Plexar 100 and a copolymer of 77.0 percent ethylene and 23.0 percent vinyl acetate, 5.5 melt index, available from E.I. DuPont deNemours.

Example II

Example 1 was repeated except that a ternary blend of polymers is employed for the weather resistant layer comprising a polyvinyl chloride resin, chlorinated polyethylene, and a copolymer of ethylene/ vinyl acetate. Various weight ratios of the polymers in each run are identified in Table II in the column entitled "Weatherable Layer". The polyvinyl chloride and chlorinated polyethylene resins were the same as in Example I. Two layer films of the above resins and of various adhesive resins are prepared as in Example I and tested for physical properties. Results are shown in Table II.

0201890

## TABLE II

| Run | Weatherable Layer[1] | Adhesive Layer | Adhesion (N/m) |
|---|---|---|---|
| 13 | 40/40/20 | Plexar 100[2] | 4.2 |
| 14 | 60/20/20 | " | 3.7 |
| 15 | 60/30/10 | " | 2.1 |
| 16 | 60/25/15 | " | 1.2 |
| 17 | 60/20/20 | Plexar 3062[3] | 10.7 |
| 18 | 60/30/10 | " | 7.9 |
| 19 | 60/25/15 | " | 7.9 |
| 20 | 60/20/20 | Plexar 3062/EAA 1410[4] | 9.1 |
| 21 | 60/25/15 | " | 7.7 |
| 22 | 60/20/20 | Plexar 100/EVA 3294[5] | 8.2 |
| 23 | 60/25/15 | " | 5.6 |

[1] Weight ratio of chlorinated polyethylene (melt index 0.7 g/10 min), polyvinyl chloride (melt index 1.17 g/10 min) and ethylene vinyl acetate 25.0 percent vinyl acetate (melt index 2.0 g/10 min), EVA 3190 available from E. I. duPont deNemours.

[2] See Table I, footnote 3.

[3] See Table I, footnote 4.

[4] See Table I, footnote 5.

[5] See Table I, footnote 6.

Example III

A weatherable resin blend of 44.7 percent polyvinyl chloride (melt index 1.17 g/10 min), 18.6 percent chlorinated polyethylene (melt index 0.7 g/10 min) and EVA 3190, ethylene/vinyl acetate copolymer, 25.0 percent vinyl acetate, melt index 2.0, available from E. I. duPont deNemours is prepared and pressed into a thin film (0.17 mm) by a platen press. An adhesive film of similar thickness is similarly prepared using a blend of 90 percent Plexar 100, (maleic anhydride modified copolymer of ethylene and vinyl acetate, 12 percent vinyl acetate 0.85 melt index, available from Norchem, Inc.) and 10 percent EVA 3190. The two films are laminated together with a hot bar sealer, as in Example I and adhered to aluminum plaques at 220°C. Strips 1.2 cm in width are cut from the plaques and tested for adhesive strength. Average adhesion of about 14.9 N/m was obtained.

33,773-F                    -16-

1.    A composite film comprising, as a first layer, a blend of a vinyl chloride polymer and a chlorinated polyolefin and, as a second layer, a normally solid thermoplastic adhesive.

2.    The film according to Claim 1, wherein the first layer blend additionally includes up to 30 percent by weight of an interpolymer comprising ethylene and at least one carboxylic acid or ester thereof containing ethylenic unsaturation.

3.    The film according to Claim 2, wherein the interpolymer is an ethylene/vinyl acetate copolymer in which the ethylene is present in an amount of from 40 to 95 weight percent based on the total weight of the interpolymer.

4.    The film according to Claim 1, wherein the first layer includes up to 15 percent by weight of an interpolymer of an ethylene/vinyl acetate copolymer in which the ethylene is present in an amount of from 50 to 90 weight percent based on the total weight of the interpolymer.

33,773-F                    -17-

5. The film according to any one of the preceding claims, wherein the vinyl chloride polymer is selected from polyvinyl chloride and polymers of vinyl chloride and at least one comonomer having up to 10 carbon atoms selected from olefins, vinyl esters and alkyl esters of unsaturated carboxylic acids.

6. The film according to any one of the preceding claims, wherein the vinyl chloride polymer has an inherent viscosity of from 0.6 to 1.0.

7. The film according to any one of the preceding claims, wherein the chlorinated polyolefin is chlorinated polyethylene having a viscosity of from 6,000 to 30,000 poise and a chlorine content of from 25 to 42 weight percent.

8. The film of any one of the preceding claims, wherein the ratio of vinyl chloride polymer to chlorinated polyolefin is from 5:95 to 80:20.

9. The film according to any one of the preceding claims, wherein said adhesive film comprises an interpolymer of an olefin and at least one comonomer selected from carboxylic acids and esters thereof having ethylenic unsaturation.

10. The film according to Claim 9, wherein said interpolymer comprises up to 60 percent by weight ethylene and at least one copolymerizable monomer selected from vinyl acetate, acrylic acid, methyl methacrylate, butyl acrylate, and mixtures thereof.

33,773-F                     -18-

11. The film according to Claim 9 or 10, wherein said adhesive comprises a blend of

1) an interpolymer of ethylene and at least one ethylenically unsaturated carboxylic acid, and

2) an interpolymer of ethylene and at least one ethylenically unsaturated carboxylic acid ester.

12. The film according to any one of Claims 1 to 8, wherein said adhesive film comprises a blend of from 5 to 95 percent by weight ethylene/vinyl acetate copolymer and the remainder comprises an ethylene/acrylic acid copolymer, wherein the ethylene in said blend is present in an amount of from 5 to 50 percent by weight.

13. The film according to any one of the preceding claims, having a thickness of from 0.01 to 1.0 mm.

14. A laminated structure comprising a substrate having adhered thereto the composite film of any one of the preceding claims.

15. The laminated structure of Claim 14, wherein the substrate comprises a metal sheet.

33,773-F                    -19-